# EUROPEAN PATENT SPECIFICATION

(11) **EP 2 219 934 B1**
(45) Date of publication and mention of the grant of the patent: **06.11.2013**
(21) Application number: 07835249.9
(22) Date of filing: 06.12.2007
(51) Int. Cl.: B62D 21/02, B60D 1/14, B62D 25/20

(54) **A BEAM FOR A HEAVY VEHICLE**
TRÄGER FÜR EIN SCHWERFAHRZEUG
POUTRE POUR VÉHICULE LOURD

(43) Date of publication of application: 25.08.2010
(73) Proprietor: Volvo Lastvagnar AB, 405 08 Göteborg (SE)
(72) Inventor: GUSTAFSSON, Jens, S-431 36 Mölndal (SE); BERGLUND, Mattias, S-416 54 Göteborg (SE)
(74) Representative: Fröhling, Werner Otto
(86) International application number: PCT/SE2007/001089
(87) International publication number: WO 2009/072939

(56) References cited:
- EP-A2- 0 963 901
- EP-A2- 1 710 149
- EP-A2- 1 710 149
- WO-A1-01/76896
- WO-A1-2009/036548
- DE-A1-102005 026 353
- US-A- 5 725 247
- US-B1- 6 250 864

## Description

### TECHNICAL FIELD

The invention relates to a beam for a heavy vehicle according to the preamble of claim 1.

The invention is applicable on heavy vehicles, in particular trucks. The invention is, however, not restricted to trucks, but may also be used for example in wheel loaders, articulated haulers, excavators and buses.

### BACKGROUND OF THE INVENTION

In a heavy vehicle having a towing member for connection to a towed trailer, the towing member is arranged to distribute the load from a towed trailer to the frame of the heavy vehicle. It is important that the load does not result in stress concentrations in the frame so as to ensure that the chassis is able to withstand the load and to avoid crack propagation.

A towing member which is constituted by an end cross member arranged in the rear part of the towing vehicle is usually shaped as a U-beam which is attached to the longitudinal main beams of the chassis frame. In addition to the portions of the end cross member which form the U-shape, the beam has also lateral flanges which are to be connected to the longitudinal main beams by means of any suitable fastener means, such as bolts, screws, rivets or similar. It has been found out that the corners of the end cross member formed between the flanges can be weak points due to stress concentrations in despite of the fact that the flanges are bolted to the frame in one or more positions.

According to prior art it is possible to weld the lateral flanges together in order to unload the corners of the end cross member. Such welding will however result in increased manufacturing costs, and a further drawback is the difficulty to calculate and design an end cross member with welded flanges with respect to fatigue stresses.

Another possible already known solution for reinforcement of the end cross member is to use additional plates for connecting the flanges of the end cross beam. Such a multi sheet design will however result in increased manufacturing costs, and increased weight of the component.

EP 1 710 149 A2 reveals a U-beam for cross-connecting longitudinal main beams of the chassis frame of a heavy vehicle and for providing a towing member for connection to a towed trailer. The three portions defining the beam are bended in a 90° angle to each other and comprise lateral flanges on both end sides for mounting the U-beam to the chassis frame of said vehicle. For enhancing stability and stress capacity of the beam it is suggested to provide a plurality of holes at the flanges of the middle-portion of the U-shaped beam. The flanges at both sides of the U-beam are not connected with each other.

US 5 725 247 B1 teaches a beam for cross-connecting longitudinal main beams of the chassis frame of a heavy vehicle. The beam comprises a lateral flange at each side of the step-shaped connecting portion for connecting the beam with said longitudinal main beams. The end part of said main beams comprises an inclined upper surface for coupling a semitrailer to the rear end of said vehicle by providing a reduced rear end cross section of the main beams.

From WO 2009/036548 A1 one can learn about a method for bending a longitudinal alignment of a step-shaped or U-shaped beam. The method comprises providing a plurality of cuts into the longitudinal extension of said beam for enhancing bending flexibility, bending the beam and rigidifying the beam in said region of increased flexibility for maintaining the acquired shape.

DE 10 2005 026 353 A1 and also US 6 250 864 B1 teach assembly devices and techniques for connecting components, wherein each component provides a semi-circle shaped recess such that when both components are connected, a fastening hole is provided for connecting both components by fastening means such as a bolt or screw. DE 10 2005 026 353 A1 suggests to cover circular protrusions of the semi-circle recesses with a clamp sleeve for connecting both components with a bolt-connection. US 6 250 864 B1 teaches two L-shaped segments for forming a T-shaped structure, each segment comprises a half hole, whereby when connecting the segments to the structure, a hole being engageable to an expanding member such as a screw is provided.

### SUMMARY OF THE INVENTION

It is an object of the invention to provide a beam for a heavy vehicle of the kind mentioned in the introduction herein, and particularly an end cross beam constituting a towing member of a truck, by which beam the problem of stress concentration can be reduced to a substantial extent in a cost effective way.

The object is achieved by a beam for a heavy vehicle according to claim 1.

By the provision of a beam where at least a part of the periphery portion of the first portion flange and at least a part of the periphery portion of the second portion flange are connected to each other by means of a connecting member acting on both the first portion flange and the second portion flange so as to enable load to be transferred between the first portion flange and the second portion flange via the connecting member and counteract movement of the first portion flange and the second portion flange relative to each other, a "closed" corner can be achieved, and the strength of the beam can be increased. The term "connecting member" is meant to comprise any suitable means for connecting the flanges relative to each other either by engagement of the flanges or by clamping the flanges against a further component, such as the frame, of a heavy vehicle in order to counteract movement of said flanges relative to each other. It is also possible to combine the both main aspects of the invention, i.e. engagement and clamping. The term "connecting member" is not mentioned to comprise a weld joint or any similar means making it impossible to separate the flanges without breaking the material. The definition of the connecting member is further discussed in the detailed description herein.

The invention is based on the insight that a so called closed corner gives a favourable load distribution and less stress concentrations which counteracts crack propagation in the corner. The periphery portions of the first portion flange and the second portion flange can be connected to each other and movement of the periphery portions relative to each other can be counteracted by means of one and the same connecting member. For example one single screw or bolt can be used for connecting the both flanges to each other.

According to one embodiment of the invention, the connecting member is formed by means of the shape of the first portion flange and the second portion flange, and engagement between the first portion flange and the second portion flange. The connecting member is preferably formed by a protruding portion in one of the first portion flange and the second portion flange, and a recess for receiving the protruding portion which recess is arranged in the other of the first portion flange and the second portion flange. In this embodiment the flanges are connected and substantially locked relative to each other without using any external fastener means. This embodiment of the invention results in a very reliable design without adding any weight to the beam and the vehicle. The invention also relates to a heavy vehicle provided with such a beam as described herein.

According to another embodiment of the invention, the first portion flange and the second portion flange are designed and arranged relative to each other so as to receive said locking member between the first portion flange and the second portion flange, and the connecting member is arranged to clamp both the first portion flange and the second portion flange against a further component of the heavy vehicle, and preferably the first portion flange is provided with a first recess and the second portion flange is provided with a second recess, wherein the first portion flange and the second portion flange are arranged in such a way that the first recess and second recess together constitute a through hole for receiving said connecting member therein. By clamping the periphery portions of the flanges against the further component by means of a bolt or screw any relative movement of the flanges can be counteracted, and at the same time a standard component can be used as the connecting member. The invention also relates to a heavy vehicle provided with such a beam clamped to the frame of the vehicle in the way as described herein.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a perspective view of a heavy vehicle provided with a beam according to the invention,
Fig. 2 is a perspective view of a beam according to the invention,
Fig. 3 is a lateral view of a portion of a heavy vehicle end cross member according to prior art,
Fig. 4a and 4b are schematic illustrations of the invention where the flanges are connected to each other by means of a connecting member formed in the flanges,
Figs. 5a, 5b and 5c are schematic illustrations of different embodiments of the invention where the flanges are to be clamped to a frame by means of a locking member, and
Figs. 6a and 6b are schematic illustrations of prior art and the principle of the invention, respectively.

### DETAILED DESCRIPTION OF PREFERRED EMBODIMENTS OF THE INVENTION

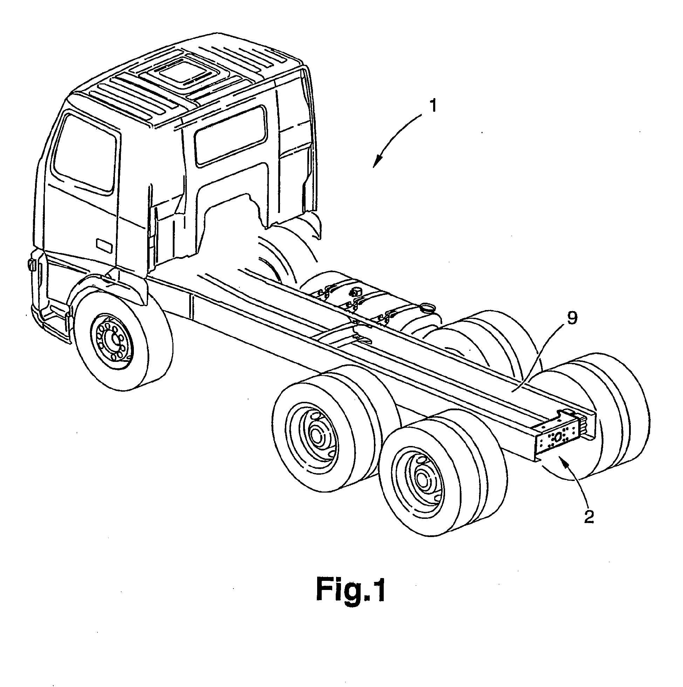

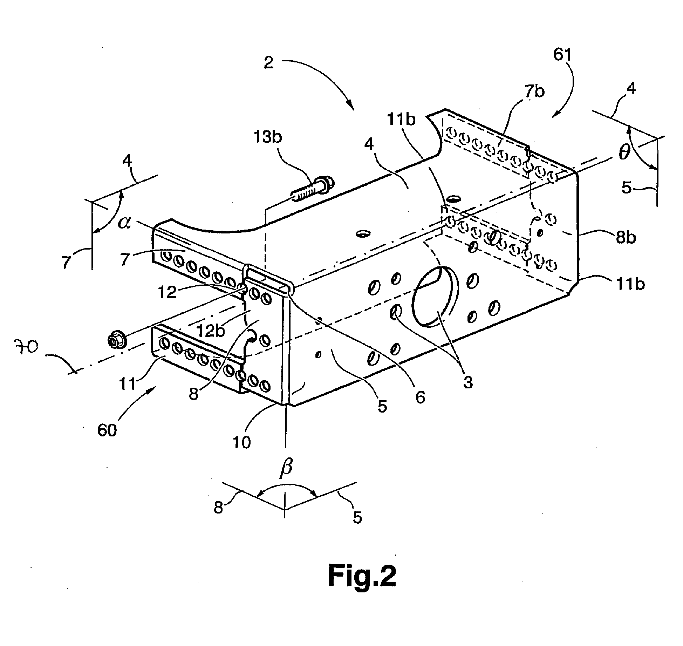

Figure 1 is a perspective view of a heavy vehicle 1 provided with a beam 2 according to the invention. The heavy vehicle is a truck and the beam is an end cross member for towing a trailer. The end cross member which is formed as a U-beam can have apertures 3 (see also Fig. 2) and/or any other means for mounting a coupling device (not illustrated) to the end cross member. The coupling device is used for enable connection to a trailer to be towed by the truck. The end cross member is arranged between and attached to two longitudinal main beams of the frame 9 of the truck in the rear part of the truck 1.

As appears from Fig. 2, the beam 2 comprises a first portion 4 and a second portion 5 which are connected to each other and angled relative to each other so as to form a corner 6. At a first end 60 of the beam, the first portion 4 has a flange 7 extending downwardly in a geometric plane, and the second portion 5 has a flange 8 extending forwardly and arranged substantially in the same geometric plane. The first and second portion flanges are directed towards each other or in directions towards the longitudinal centre line 70 of the beam 2, and the flanges 7, 8 are used for mounting the end cross member 2 to the chassis frame 9. In the embodiment illustrated the beam 2 also comprises a third portion 10 connected to the second portion 5. The second portion 5 and the third portion 10 are angled relative to each other. The first, second and third portions preferably form a U-beam. The third portion 10 may have a third portion flange 11 arranged substantially in the same plane as the first portion flange 7 which third portion flange 11 extends upwardly. The extension directions downwardly, forwardly and upwardly are firstly used to describe the flanges directions relative to each other, although these directions can be used for indicate how the beam and the flanges are preferably orientated when the beam is installed in the truck.

The first portion 4 is preferably a sheet and the first portion flange 7 is bended from the sheet to form an angle α between the first portion flange 7 and the remaining part 4 of the first portion. The angle α is preferably substantially 90°. The second portion 5 is preferably a sheet and the second portion flange 8 is bended from the sheet to form an angle β between the second portion flange 8 and the remaining part 5 of the second portion. The angle β is preferably substantially 90°. The first portion 4 and the second portion 5, as well as the second portion 5 and the third portion 10, form an angle θ which is preferably substantially 90°.

Furthermore, at the second end 61 of the beam 2 corresponding flanges 7b, 8b, and 11 b are preferably arranged in the same way to enable also this end 61 of the end cross member 2 to be attached to the chassis frame 9.

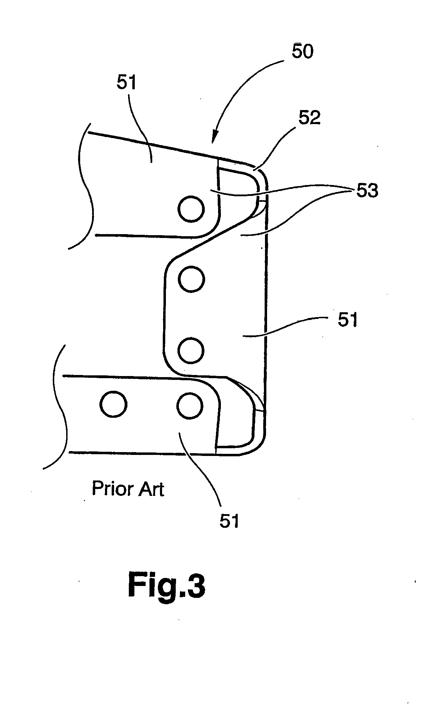

In Fig. 3 a portion of an end cross member 50 according to prior art is illustrated in a lateral view. Although the lateral flanges 51 of the end cross member 50 are attached to the chassis of the vehicle by means of several bolts, stress concentrations can arise in the corners 52. Undesired movements in the unlocked material in the periphery portions 53 of the flanges closest to the corner due to the load transferred during towing of a trailer will cause stresses in the corner 52 of the end cross member 50.

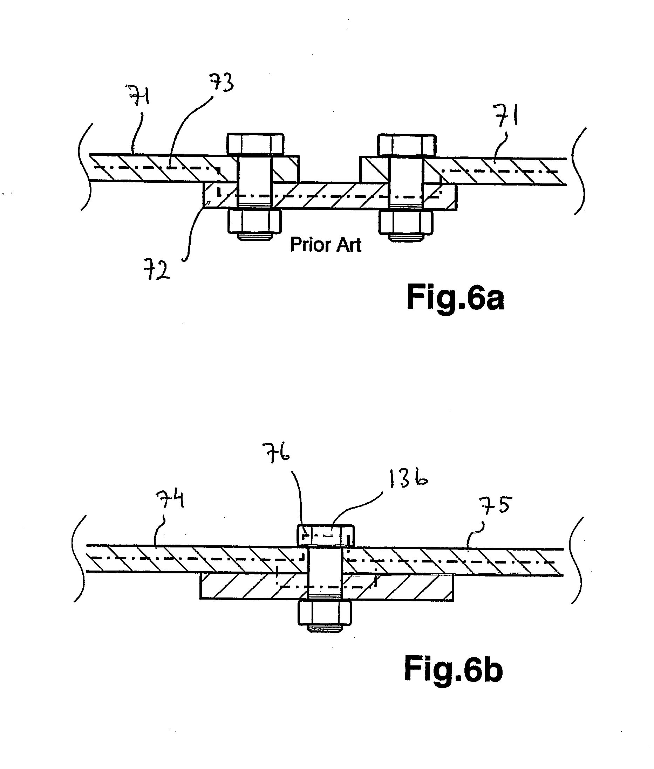

With reference to Figs. 6a and 6b, the principle of the invention is further explained and compared to the design used in the prior art heavy vehicle beam illustrated in Fig. 3. Fig. 6a shows in a cross section view how the load is transferred between two adjacent flanges 71 which are conventionally bolted to a further component 72 (see also Fig. 3).

The load is transferred from one flange to said further component and then to the other flange. See dash dotted lines 73. This implies that any movement between the flanges is counteracted solely by said further component.

In contrary, by means of a connecting member 13b in accordance with the invention, which connecting member acts on both flanges 74, 75 as illustrated in Fig. 6b, load can also be transferred between the flanges via the connecting member, such as a bolt. This will result in an increased strength of the design. Due to the friction between the connecting member 13b and the flanges 74, 75 also the material of the connecting member, the bolt head in the illustrated example, counteracts any movement of the flanges relative to each other. See dash dotted lines 76 in Fig. 6b.

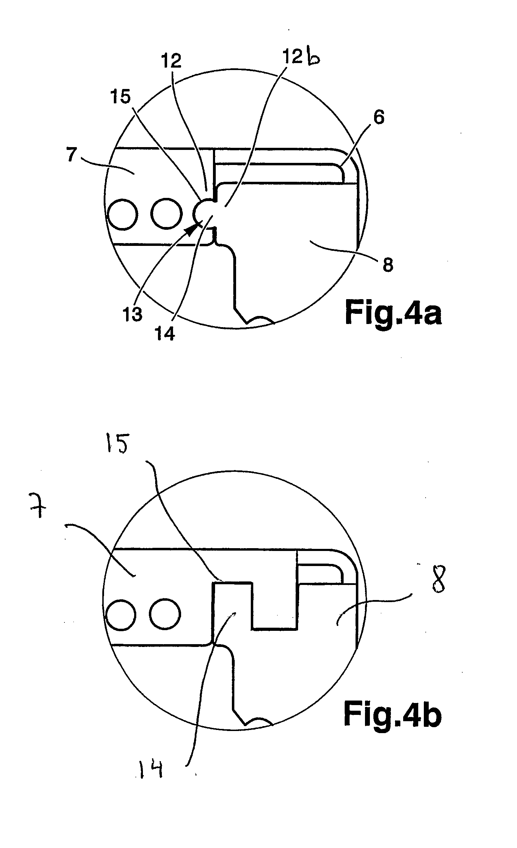

As illustrated for example in Fig. 4a, according to another aspect of the invention a periphery portion 12 of the first portion flange 7 and a periphery portion 12b of the second portion flange 8, which periphery portions 12, 12b are preferably arranged adjacent to each other and close to the corner 6, are connected to each other by means of a connecting member 13 shaped in the flanges. In this case the flanges are substantially locked against movement relative to each other by the connecting member 13 so as to improve the strength of said corner.

In the embodiments illustrated in Fig. 4a and 4b the connecting member 13 is formed by means of the shape of the first portion flange and the second portion flange. The connecting member can be formed by a protruding portion 14 in one of the first portion flange and the second portion flange (the second portion flange 8 in the illustrated example), and a corresponding portion having a recess 15 in the other of the first portion flange and the second portion flange (the first portion flange 7 in the illustrated example). The first portion flange 7 and the second portion flange 8 are connected to each other by engagement between said protruding portion 14 and the recess 15. The connecting member 13 is preferably designed as a puzzle piece-joint which implies that the flanges 7, 8 are locked to each other in all directions within the main extension plane of the flanges 7, 8. In this embodiment no external connecting member is needed. The strength of the corner can be improved by the fact that load can also be transferred directly between the flanges. In Fig. 4b each flange 7, 8 is provided with at least one of a protrusion in the shape of a square teeth and a corresponding square shaped recess, whereby the flanges are connected to each other by engagement between the protrusion and the other flange receiving the protrusion in the recess.

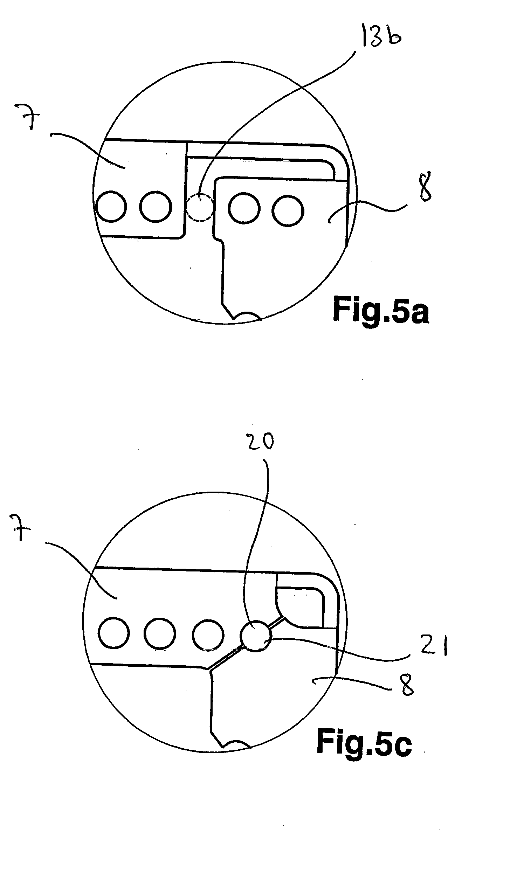

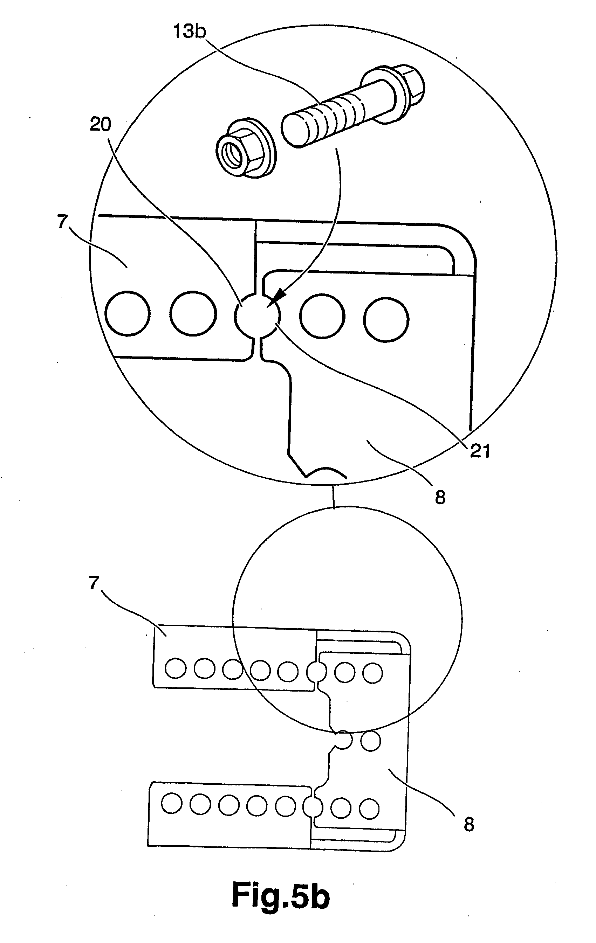

In the different embodiments illustrated in Fig. 5a, 5b, and 5c the first portion flange 7 and the second portion flange 8 are arranged relative to each other so as to receive an external connecting member 13b between the first and second portion flanges, and enable the connecting member 13b to clamp the first and second portion flanges against a further component of the heavy vehicle 1. The further component is preferably the frame 9 of the heavy vehicle (See Fig. 19). The beam can be attached to the longitudinal main beams of the frame with or without intermediate spaces arranged between the cross member beam 2 and the frame 9. The first portion flange 7 and the second portion flange 8 are preferably arranged close to each other but separately from each other. In other words, the current flanges are arranged substantially in one and the same geometric plane and the flanges are not overlapping each other when looking at the lateral view of the beam 2, i.e. in a direction perpendicular to the main extension plane of the flanges 7, 8. Advantageously the flanges are arranged in the same geometric plane so as to make the installation easy and to eliminate the need of adaptations of the frame or the spacers used which otherwise are required.

In the embodiment illustrated in Fig. 5a the distance between the flanges is adapted to the connecting member 13b, a bolt, in a way such that the bolt can be arranged between the flanges and at the same time the bolt head is able to clamp both flanges against the frame of the heavy vehicle. In the embodiments illustrated in Fig. 5b and 5c, the first portion flange 7 is provided with a first recess 20 and the second portion flange 8 is provided with a second recess 21. The first portion flange 7 and the second portion flange 8 are further arranged in such a way that the first recess 20 and second recess 21 together constitute a through hole for receiving the connecting member 13b therein. This implies that the through hole can be of the same size as the other standard holes used for connection of the end cross beam and a corresponding standard screw or bolt can used as the locking means. The first recess 20 is preferably a part of a circular through hole and the second recess 21 is preferably substantially the remaining part of said circular through hole, and more preferably the first recess constitutes substantially 50% of said circular through hole.

It is to be understood that the present invention is not limited to the embodiments described above and illustrated in the drawings; rather, the skilled person will recognize that many changes and modifications may be made within the scope of the appended claims.

## Claims

1. A beam (2) cross-connecting longitudinal main beams of the chassis frame (9) as an end cross member of a heavy vehicle (1) to provide a towing member for connection to a towed trailer, comprising a first portion (4) and a second portion (5) of the beam (2) which are connected to each other and angled relative each other so as to form a corner (6) of the beam (2), the first portion (4) having a lateral flange (7) with a main extension in a geometric plane, and the second portion (5) having a lateral flange (8) with a main extension substantially in the same geometric plane, the flanges (7,8) are provided for mounting the beam (2) to the chassis frame (9), **characterized in that** at least a part of the periphery portion (12) of the first portion flange (7) and at least a part of the periphery portion (12b) of the second portion flange (8) are connected to each other by means of a connecting member (13; 13b) acting on both the first portion flange (7) and the second portion flange (8) so as to enable load to be transferred between the first portion flange (7) and the second portion flange (8) via the connecting member (13; 13b) and counteract movement of the first portion flange (7) and the second portion flange (8) relative to each other for increasing strength of the beam (2).

2. A beam according to claim 1 , **characterized in that** said connecting member (13) is formed by means of the shape of the first portion flange (7) and the second portion flange (8) and engagement between the first portion flange (7) and the second portion flange (8).

3. A beam according to claim 2, **characterized in that** said connecting member (13) is formed by a protruding portion (14) in one of the first portion flange and the second portion flange (8), and a recess (15) for receiving the protruding portion which recess is arranged in the other of the first portion flange (7) and the second portion flange.

4. A beam according to claim 3, **characterized in that** said connecting member (13) is designed as a puzzle piece-joint.

5. A beam according to claim 1 , **characterized in that** the first portion flange (7) and the second portion flange (8) are designed and arranged relative to each other so as to receive said connecting member (13b) between the first portion flange (7) and the second portion flange (8), and the connecting member (13b) is arranged to clamp both the first portion flange (7) and the second portion flange (8) against a further component (9) of the heavy vehicle (1).

6. A beam according to claim 5, **characterized in that** the first portion flange (7) is provided with a first recess (20) and the second portion flange (8) is provided with a second recess (21), the first portion flange (7) and the second portion flange (8) being arranged in such a way that the first recess (20) and second recess (21) together constitute a through hole for receiving said connecting member (13b) therein.

7. A beam according to claim 6, **characterized in that** the first recess (20) is a part of a circular through hole and the second recess (21) is substantially the remaining part of said circular through hole.

8. A beam according to claim 7, **characterized in that** the first recess (209 constitutes substantially 50% of said circular through hole.

9. A beam according to any preceding claim, **characterized in that** the first portion (4) is a sheet and the first portion flange (7) is bended from the sheet to form an angle (α) between the first portion flange (7) and the remaining part of the first portion (4).

10. A beam according to claim 9, **characterized in that** the angle (α) is substantially 90°.

11. A beam according to any preceding claim, **characterized in that** the second portion (5) is a sheet and the second portion flange (8) is bended from the sheet to form an angle (β) between the second portion flange (8) and the remaining part of the second portion (5).

12. A beam according to claim 11, **characterized in that** the angle (β) is substantially 90°.

13. A beam according to any preceding claim, **characterized in that** the first portion (4) and the second portion (5) form an angle (Θ) which is substantially 90°.

14. A beam according to any preceding claim, **characterized in that** the beam comprises a third portion (10) connected to the second portion (5), said first portion (4), second portion (5) and third portion (10) constituting a U-beam.

15. A heavy vehicle frame (9) comprising a beam (2) according to any of claims 1-14.

16. A heavy vehicle (1) comprising a beam (2) according to any of claims 1-14.

## Patentansprüche

1. Träger (2) für eine Querverbindung länglicher Hauptträger des Chassis-Rahmens (9) als Endquerelement eines Schwerfahrzeugs (1) zur Schaffung eines Zugelements zur Verbindung mit einem gezogenen Anhänger, mit einem ersten Abschnitt (4) und einem zweiten Abschnitt (5) des Trägers (2), die miteinander verbunden sind und im Winkel zueinander so angeordnet sind, dass sie eine Ecke (6) des Trägers (2) bilden, wobei der erste Abschnitt (4) einen seitlichen Flansch (7) mit einer Haupterstreckung in einer geometrischen Ebene aufweist und der zweite Abschnitt (5) einen seitlichen Flansch (8) mit einer Haupterstreckung im Wesentlichen in derselben geometrischen Ebene aufweist, wobei die Flansche (7, 8) zur Montage des Trägers (2) an dem Chassisrahmen (9) vorgesehen sind, **dadurch gekennzeichnet, dass** wenigstens ein Teil des Umfangsabschnitts (12) des Flansches (7) des ersten Abschnittes und wenigstens ein Teil des Umfangsabschnitts (12b) des Flansches (8) des zweiten Abschnitts miteinander mittels eines Verbindungselements (13; 13b) verbunden sind, das sowohl auf den Flansch (7) des ersten Abschnitts als auch auf den Flansch (8) des zweiten Abschnitts wirkt, damit eine Last zwischen dem Flansch (7) des ersten Abschnitts und dem Flansch (8) des zweiten Abschnitts über das Verbindungselement (13; 13b) übertragen werden kann und einer Bewegung des Flansches (7) des ersten Abschnitts und des Flansches (8) des zweiten Abschnitts relativ zueinander zur Erhöhung der Festigkeit des Trägers (2) entgegenwirken kann.

2. Träger nach Anspruch 1, **dadurch gekennzeichnet, dass** das Verbindungselement (13) durch die Form des Flansches (7) des ersten Abschnitts und des Flansches (8) des zweiten Abschnitts und durch einen Eingriff zwischen dem Flansch (7) des ersten Abschnitts und dem Flansch (8) des zweiten Abschnitts gebildet wird.

3. Träger nach Anspruch 2, **dadurch gekennzeichnet, dass** das Verbindungselement (13) durch einen vorstehenden Abschnitt (14) in einem von dem Flansch des ersten Abschnitts und dem Flansch (8) des zweiten Abschnitts und einer Aussparung (15) zur Aufnahme des vorstehenden Abschnitts gebildet wird, wobei die Aussparung in dem anderen des Flansches (7) des ersten Abschnitts und des Flansches des zweiten Abschnitts angeordnet ist.

4. Träger nach Anspruch 3, **dadurch gekennzeichnet, dass** das Verbindungselement (13) als Puzzlestück-Verbindung ausgestaltet ist.

5. Träger nach Anspruch 1, **dadurch gekennzeichnet, dass** der Flansch (7) des ersten Abschnitts und der Flansch (8) des zweiten Abschnitts so ausgestaltet und relativ zueinander angeordnet sind, dass sie das Verbindungselement (13b) zwischen dem Flansch (7) des ersten Abschnitts und dem Flansch (8) des zweiten Abschnitts aufnehmen, und das Verbindungselement (13b) so angeordnet ist, dass es sowohl den Flansch (7) des ersten Abschnitts als auch den Flansch (8) des zweiten Abschnitts gegen eine weitere Komponente des Schwerfahrzeugs (1) klemmt.

6. Träger nach Anspruch 5, **dadurch gekennzeichnet, dass** der Flansch (7) des ersten Abschnitts mit einer ersten Ausnehmung (20) versehen ist und der Flansch (8) des zweiten Abschnitts mit einer zweiten Ausnehmung (21) versehen ist, wobei der Flansch (7) des ersten Abschnitts und der Flansch (8) des zweiten Abschnitts so angeordnet sind, dass die erste Ausnehmung (20) und die zweite Ausnehmung (21) zusammen eine Durchgangsöffnung zur Aufnahme des Verbindungselements (13b) in ihr bilden.

7. Träger nach Anspruch 6, **dadurch gekennzeichnet, dass** die erste Ausnehmung (20) ein Teil einer kreisförmigen Durchgangsöffnung ist und die zweite Ausnehmung (21) im Wesentlichen der verbleibende Teil der kreisförmigen Durchgangsöffnung ist.

8. Träger nach Anspruch 6, **dadurch gekennzeichnet, dass** die erste Ausnehmung (20) im Wesentlichen 50% der kreisförmigen Durchgangsöffnung bildet.

9. Träger nach irgendeinem vorhergehenden Anspruch, **dadurch gekennzeichnet, dass** der erste Abschnitt (4) ein Blech ist und der Flansch (7) des ersten Abschnitts aus dem Blech gebogen ist, um einen Winkel (α) zwischen dem Flansch (7) des ersten Abschnitts und dem verbleibenden Teil des ersten Abschnitts (4) zu bilden.

10. Träger nach Anspruch 9, **dadurch gekennzeichnet, dass** der Winkel (α) im Wesentlichen 90° beträgt.

11. Träger nach irgendeinem vorhergehenden Anspruch, **dadurch gekennzeichnet, dass** der zweite Abschnitt (5) ein Blech ist und der Flansch (8) des zweiten Abschnitts aus dem Blech gebogen ist, um einen Winkel (β) zwischen dem Flansch (8) des zweiten Abschnitts und dem verbleibenden Teil des zweiten Abschnitts (5) zu bilden.

12. Träger nach Anspruch 11, **dadurch gekennzeichnet, dass** der Winkel (β) im Wesentlichen 90° beträgt.

13. Träger nach irgendeinem vorhergehenden Anspruch, **dadurch gekennzeichnet, dass** der erste Abschnitt (4) und der zweite Abschnitt (5) einen Winkel (θ) bilden, der im Wesentlichen 90° beträgt.

14. Träger nach irgendeinem vorhergehenden Anspruch, **dadurch gekennzeichnet, dass** der Träger einen dritten Abschnitt (10) umfasst, der mit dem zweiten Abschnitt (5) verbunden ist, wobei der erste Abschnitt (4), der zweite Abschnitt (5) und der dritte Abschnitt (10) einen U-Träger bilden.

15. Schwerfahrzeugrahmen (9) mit einem Träger (2) nach einem der Ansprüche 1 bis 14.

16. Schwerfahrzeug (1) mit einem Träger (2) nach einem der Ansprüche 1 bis 14.

## Revendications

1. Poutre (2) reliant transversalement des poutres principales longitudinales du cadre de châssis (9) en tant qu'élément transversal d'extrémité d'un véhicule lourd (1) pour fournir un élément de traction destiné à être relié à une remorque tractée, comprenant une première partie (4) et une deuxième partie (5) de la poutre (2) qui sont reliées l'une à l'autre et forment un angle l'une par rapport à l'autre de manière à former un coin (6) de la poutre (2), la première partie (4) ayant un rebord latéral (7) ayant une étendue principale dans un plan géométrique, et la deuxième partie (5) ayant un rebord latéral (8) ayant une étendue principale sensiblement dans le même plan géométrique, les rebords (7, 8) sont agencés pour monter la poutre (2) sur le cadre de châssis (9), **caractérisée en ce qu'**au moins une partie de la partie de périphérie (12) du rebord de première de partie (7) et au moins une partie de la partie de périphérie (12b) du rebord de deuxième partie (8) sont reliées l'une à l'autre par l'intermédiaire d'un élément de liaison (13 ; 13b) agissant à la fois sur le rebord de première partie (7) et le rebord de deuxième parties (8) de manière à permettre qu'une charge soit transférée entre le rebord de première partie (7) et le rebord de deuxième partie (8) par l'intermédiaire de l'élément de liaison (13 ; 13b) et contrecarre un déplacement du rebord de première partie (7) et du rebord de deuxième partie (8) l'un par rapport à l'autre pour augmenter la résistance de la poutre (2).

2. Poutre selon la revendication 1, **caractérisée en ce que** l'élément de liaison (13) est formé par l'intermédiaire de la forme du rebord de première partie (7) et du rebord de deuxième partie (8) et la mise en prise entre le rebord de première partie (7) et le rebord de deuxième partie (8).

3. Poutre selon la revendication 2, **caractérisée en ce que** l'élément de liaison (13) est formé par une partie en saillie (14) dans l'un parmi le rebord de première partie et le rebord de deuxième partie (8), et par un évidement (15) destiné à recevoir la partie en saillie, lequel évidement est agencé dans l'autre parmi le rebord de première partie (7) et le rebord de deuxième partie.

4. Poutre selon la revendication 3, **caractérisée en ce que** l'élément de liaison (13) est conçu comme une jonction de pièces de puzzle.

5. Poutre selon la revendication 1, **caractérisée en ce que** le rebord de première partie (7) et le rebord de deuxième partie (8) sont conçus et agencés l'un par rapport à l'autre de manière à recevoir l'élément de liaison (13b) entre le rebord de première partie (7) et le rebord de deuxième partie (8), et l'élément de liaison (13b) est agencé pour serrer à la fois le rebord de première partie (7) et le rebord de deuxième partie (8) contre un composant supplémentaire (9) du véhicule lourd (1).

6. Poutre selon la revendication 5, **caractérisée en ce que** le rebord de première partie (7) est muni d'un premier évidement (20) et le rebord de deuxième partie (8) est muni d'un second évidement (21), le rebord de première partie (7) et le rebord de deuxième partie (8) étant agencés de telle sorte que le premier évidement (20) et le second évidement (21) constituent ensemble un trou traversant destiné à recevoir l'élément de liaison (13b) dans celui-ci.

7. Poutre selon la revendication 6, **caractérisée en ce que** le premier évidement (20) est une partie d'un trou traversant circulaire et le second évidement (21) est sensiblement la partie restante du trou traversant circulaire.

8. Poutre selon la revendication 7, **caractérisée en ce que** le premier évidement (20) constitue sensiblement 50 % du trou traversant circulaire.

9. Poutre selon l'une quelconque des revendications précédentes, **caractérisée en ce que** la première partie (4) est une feuille et le rebord de première partie (7) est plié à partir de la feuille pour former un angle (α) entre le rebord de première partie (7) et la partie restante de la première partie (4).

10. Poutre selon la revendication 9, **caractérisée en ce que** l'angle (α) est sensiblement de 90°.

11. Poutre selon l'une quelconque des revendications précédentes, **caractérisée en ce que** la deuxième partie (5) est une feuille et le rebord de deuxième partie (8) est plié à partir de la feuille pour former un angle (β) entre le rebord de deuxième partie (8) et la partie restante de la deuxième partie (5).

12. Poutre selon la revendication 11, **caractérisée en ce que** l'angle (β) est sensiblement de 90°.

13. Poutre selon l'une quelconque des revendications précédentes, **caractérisée en ce que** la première partie (4) et la deuxième partie (5) forment un angle (θ) qui est sensiblement de 90°.

14. Poutre selon l'une quelconque des revendications précédentes, **caractérisée en ce que** la poutre comprend une troisième partie (10) reliée à la deuxième partie (5), la première partie (4), la deuxième partie (5) et la troisième partie (10) constituant une poutre en U.

15. Cadre de véhicule lourd (9) comprenant une poutre (2) selon l'une quelconque des revendications 1 à 14.

16. Véhicule lourd (1) comprenant une poutre (2) selon l'une quelconque des revendications 1 à 14.
